# EUROPÄISCHE PATENTSCHRIFT

(11) **EP 2 415 590 B1**
(45) Veröffentlichungstag und Bekanntmachung des Hinweises auf die Patenterteilung: **01.05.2013**
(21) Anmeldenummer: 11008778.0
(22) Anmeldetag: 20.01.2009
(51) Int. Cl.: B31B 19/64, B31B 23/00, B65B 41/18, B65B 43/04, B65B 51/30, B29C 65/00, B29C 65/18

(54) **Vorrichtung zum Herstellen von Tabak-Beuteln**
Device for producing tobacco bags
Dispositif de fabrication de sachets de tabac

(30) Priorität: 05.02.2008 DE 102008007752
(43) Veröffentlichungstag der Anmeldung: 08.02.2012
(62) Teilanmeldung aus: 09000692.5
(73) Patentinhaber: Focke & Co. (GmbH & Co. KG), 27283 Verden (DE)
(72) Erfinder: Beckmann, Frank, 21521 Aumühle (DE); Storcks, Andreas, 21271 Asendorf (DE); Roesler, Burkard, 27337 Blender (DE)
(74) Vertreter: Bolte, Erich

(56) Entgegenhaltungen:
- EP-A1- 0 105 578
- DE-A1- 2 352 528
- DE-A1- 3 446 409
- DE-A1- 19 820 935
- DE-B1- 2 530 636
- US-A- 4 128 049
- US-A- 4 714 454
- US-A1- 2005 022 476
- US-B1- 6 761 016

## Beschreibung

Die Erfindung betrifft eine Vorrichtung zum Herstellen von Tabak-Beuteln mit den Merkmalen des Oberbegriffs des Anspruchs 1.

Derartige Beutel sind überwiegend als Wickel-Beutel ausgeführt. Die Wickellasche wird um die Tasche herum gelegt und mittels Tape fixiert. Die Öffnung der Tasche ist mit einer Verschlussnaht versehen, die bei erstmaliger Ingebrauchnahme geöffnet wird.

Bei einer bekannten Vorrichtung (DE 34 46 409 A1) wird die Folienbahn von einer Bobine mit horizontaler Drehachse abgezogen und während der Bildung eines fortlaufenden Bahnschenkels in eine aufrechte Ebene geführt. Die vorbereitete Folienbahn wird demnach in horizontaler Richtung transportiert, und zwar in einer vertikalen Ebene. Im Bereich einer Siegelstation werden gleichzeitig drei quergerichtete, aufrechte Verbindungsnähte im Bereich des Bahnschenkels angebracht. Die Folienbahn wird sodann einem um eine vertikale Achse drehenden Revolver zugeführt. Vor Übergabe an den Revolver werden die Beutel von der Bahn abgetrennt. Der Revolver ist längs des Umfangs mit Aufnahmen versehen, die je einen Beutel aufnehmen und in vertikaler Ebene durch mehrere Bearbeitungsstation transportieren. Bei der Erfindung geht es darum, eine Vorrichtung für die Herstellung und Handhabung von Beuteln weiterzuentwickeln, derart, dass eine hohe Leistungsfähigkeit bei kompakter Bauweise erzielt wird.

Zur Lösung dieser Aufgabe ist die erfindungsgemäße Vorrichtung durch die Merkmale des Anspruchs 1 gekennzeichnet.

Bei der erfindungsgemäßen Vorrichtung geht es darum, die für die Herstellung der Beutel erforderlichen Organe bzw. Arbeitsstationen so zu positionieren, dass ein störungsfreier Arbeitsablauf bei kompakter Bauweise gewährleistet ist. Eine Besonderheit besteht darin, dass die Bobine als Bahnspeicher in einer besonderen Relativstellung, nämlich quer zur Hauptförderrichtung, ausgerichtet ist. Auch ein anschließendes Bahnpendel ist so orientiert. Die Faltstation der Bahn bewirkt eine Veränderung der Förderrichtung. Auch die nachfolgenden Organe sind in kompakter Bauweise positioniert.

Weitere Einzelheiten der Erfindung werden nachfolgend anhand der Zeichnungen näher erläutert. Es zeigt:
- Fig. 1: einen (Tabak-)Beutel in Schließstellung bei perspektivischer Darstellung,
- Fig. 2: einen Abschnitt einer (Folien-)Bahn zum Herstellen von Beuteln gemäß Fig. 1, ebenfalls perspektivisch,
- Fig. 3: eine Anlage zum Herstellen, Füllen und Verschließen von (Tabak-)Beuteln in vereinfachter, perspektivischer Darstellung,
- Fig. 4: die Vorrichtung gemäß Fig. 3 in einer Queransicht gemäß Pfeil IV in Fig. 3,
- Fig. 5: eine Seitenansicht der Vorrichtung gemäß Pfeil V in Fig. 3,
- Fig. 6: ein Detail einer Siegelstation in vergrößertem Maßstab,
- Fig. 7: eine Einzelheit entsprechend Fig. 6 eines anderen Ausführungsbeispiels,
- Fig. 8: eine Darstellung analog Fig. 5 einer anderen Ausführungsform der Siegelstation,
- Fig. 9: eine Queransicht bzw. Draufsicht der Siegelstation gemäß Pfeil IX in Fig. 8,
- Fig. 10: eine Darstellung analog Fig. 5, Fig. 8 für ein weiteres Ausführungsbeispiel der Siegelstation,
- Fig. 11 1: einen Ausschnitt XI der Siegelstation in Fig. 8, bei vergrößertem Maßstab,
- Fig. 12: die Einzelheit gemäß Fig. 11 bei veränderter Stellung von Organen,
- Fig. 13: die Einzelheit gemäß Fig. 11, Fig. 12 in nochmals veränderter Position von Organen.

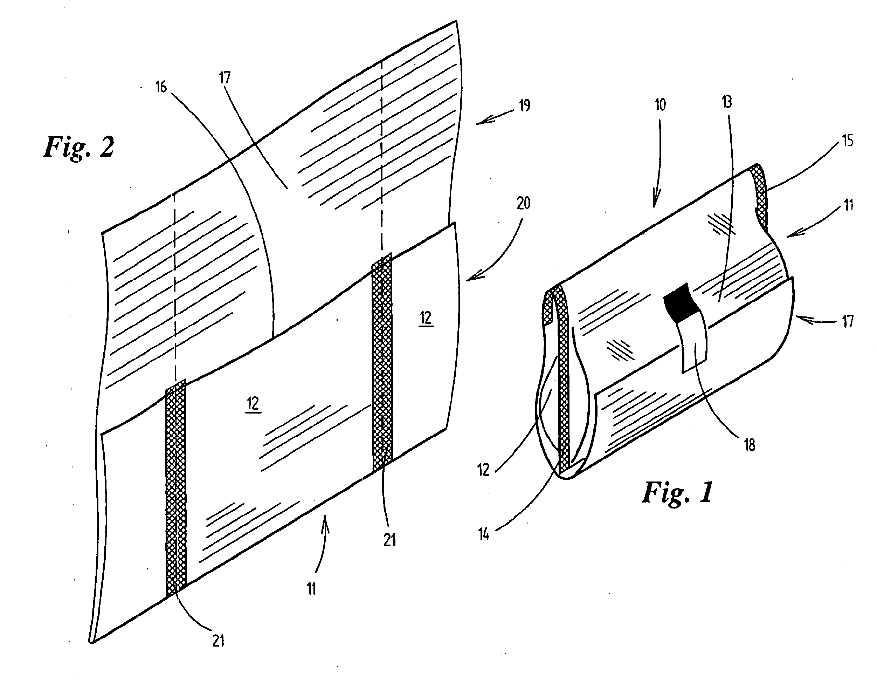

Fig. 1 zeigt ein Beispiel für einen Beutel 10 aus dünnem Verpackungsmaterial, insbesondere aus (thermisch siegelbarer bzw. schweißbarer) Folie. Der Beutel 10 besteht aus einem einstückigen, im Wesentlichen rechteckigen, langgestreckten Zuschnitt, der aufgrund entsprechender Faltung eine Tasche 11 bildet für den Packungsinhalt. Die Tasche 11 ist durch eine Taschen-Vorderwand 12 und eine Taschen-Rückwand 13 begrenzt, die durch Seitennähte 14, 15 miteinander verbunden sind. Eine Öffnung 16 dient zum Befüllen der Tasche 11 und zur Entnahme des Inhalts. Die Taschen-Rückwand 13 ist über die Öffnung 16 hinaus verlängert und bildet eine Verschlusslasche bzw. eine Wickellasche 17. Diese ist gemäß Fig. 1 bei gefüllter und durch einen Verschlussstreifen geschlossener Öffnung 16 um die Tasche herumgefaltet, derart, dass ein Endbereich der Wickellasche 17 an der Taschen-Rückwand 13 anliegt und an dieser mittels Tape 18 lösbar fixiert ist.

Die Beutel 10 werden durch Abtrennen von einer fortlaufenden Bahn 19 aus Folie oder anderem geeigneten Verpackungsmaterial gewonnen. Die Bahn 19 wird während fortlaufenden Transports in Längsrichtung gefaltet unter Bildung eines Bahnschenkels 20. Dieser definiert die Tasche 11. Durch quergerichtete Verbindungsnähte 21 wird der Bahnschenkel 20 an der Bahn 19 fixiert. Ein quergerichteter Trennschnitt wird mittig im Bereich der Verbindungsnähte 21 ausgeführt, sodass komplette Beutel 10 entstehen. Die Verbindungsnaht 21 hat die doppelte Breite einer Seitennaht 14, 15.

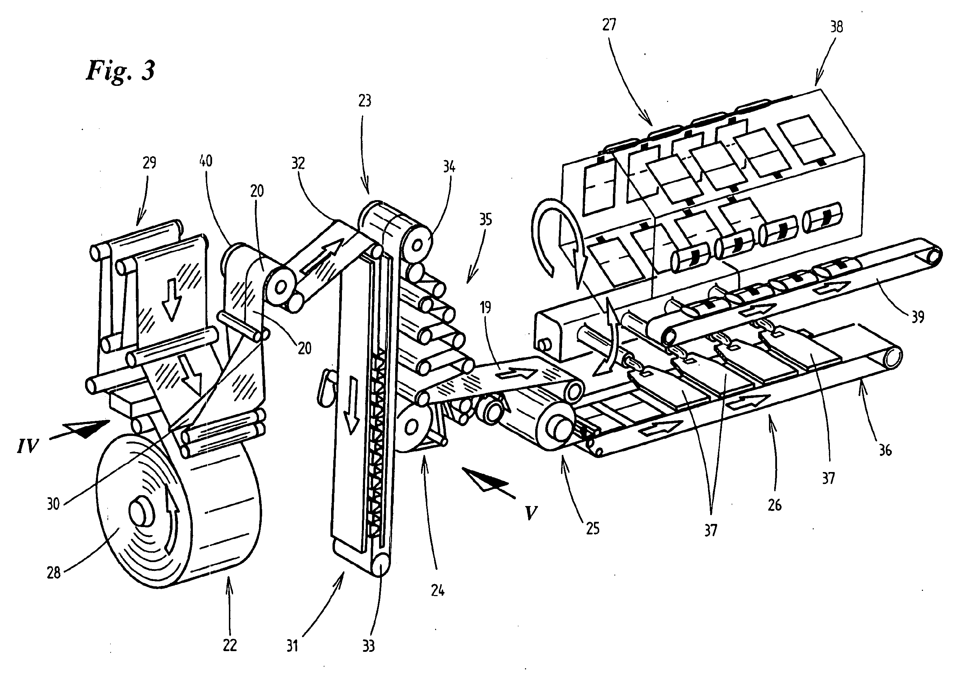

Die Herstellung und Weiterverarbeitung der Beutel 10 erfolgt in einer kompakten, leistungsfähigen Vorrichtung gemäß Fig. 3. Diese weist mehrere Stationen auf, nämlich eine Folienstation 22, eine Siegelstation 23, eine Tapestation 24, eine Trennstation 25, eine Übergabestation 26 und eine Füll- und Verschließstation 27. Die Organe bzw. Aggregate der einzelnen Stationen sind in einer funktional sowie hinsichtlich der Platzbedarfs optimalen Konfiguration angeordnet. In der Folienstation 22 ist eine Bobine 28 für die Folienbahn 19 mit horizontaler Achse positioniert, die sich in der Hauptförderrichtung erstreckt. Die Bahn 19 wird demnach quer zu dieser Förderrichtung von der Bobine 28 abgezogen und über ein erstes Ausgleichspendel 29 in den Bereich eines Faltorgans 30 geführt. Dieses ist so angeordnet zwischen Umlenkwalzen, dass während des Transports durch Umfalten der fortlaufende Bahnschenkel 20 gebildet und zugleich die so vorbereitete Bahn 19 in die Hauptförderrichtung umgelenkt wird.

Die gefaltete Bahn 19 gelangt nun in den Bereich der Siegelstation 23 mit einem aufrechten Siegelaggregat 31. Die Bahn 19 wird demnach in vertikaler Ebene durch das Siegelaggregat 31 hindurchgeführt. Die Förderrichtung erstreckt sich von einer oberen Umlenkwalze 32 an der Eingangsseite des Siegelaggregats 31 abwärts bis zu einer unteren Umlenkwalze 33 an der Austrittsseite. Zwischen den Umlenkstellen wird die Bahn 19 taktweise transportiert. Mindestens während des Vorgangs des Siegelns, nämlich während des Anbringens von quergerichteten Verbindungsnähten 21, wird die Bahn weitgehend spannungsfrei und antriebslos gehalten.

Durch die untere Umlenkwalze 33 wird die Bahn 19 nach Verlassen des Siegelaggregats 31 in die entgegengesetzte Förderrichtung umgelenkt, nämlich in Aufwärtsrichtung, und war unmittelbar benachbart und parallel zum Siegelaggregat 31. Eine obere Umlenkung erfolgt durch eine Umlenkwalze 34, die zugleich Antriebswalze für die Bahn ist, und zwar insbesondere mit einem Servoantrieb. Die Umlenkwalze 34 ist etwa in Höhe des Eintritts der Bahn 19 in das Siegelaggregat 31 angeordnet.

Im Anschluss an die Umlenkwalze 34 läuft die Bahn 19 über ein weiteres, zweites Ausgleichspendel 35. Dieses gleicht die Bewegungsunterschiede der Bahn 19 im Bereich des Siegelaggregats 31 einerseits und der nachfolgenden Aggregate andererseits aus.

Es folgt die Tapestation 24. In deren Bereich wird das Tape 18, also der klebende Verschlussstreifen für den Beutel 10, an der Bahn 19 in packungsgerechter Position angebracht. In dieser Station können darüber hinaus weitere Zuschnitte an der Bahn 19 angebracht werden, zum Beispiel Druckträger (Coupons) oder sog. Sticker zum Fixieren von Beigaben wie Zigarettenpapier. Im Anschluss an diese Station folgt die Trennstation 25 mit einem Trennmesser zum Abtrennen der Beutel 10 von der Bahn 19, wobei der Trennschnitt jeweils mittig im Bereich der Verbindungsnaht 21 ausgeführt wird.

Die Beutel 10 werden einem Beutelförderer 36 übergeben, der die Beutel 10 in Fortsetzung der Hauptrichtung fördert und zur Übergabe an die Füll- und Verschließstation 27 bereit hält. Durch Übergabeorgane 37 werden jeweils mehrere, zum Beispiel vier Beutel 10 auf dem Beutelförderer 36 gleichzeitig erfasst, abgehoben und an einen Beutel-Revolver 38 übergeben. Dieser transportiert die Beutel 10 unter Drehung entlang einer Bewegungsbahn quer zur Hauptförderrichtung, wobei die Beutel 10 in aufeinanderfolgenden Stationen befüllt und verschlossen werden. Die kompletten Beutel 10 werden von einem Abförderer 39 abtransportiert.

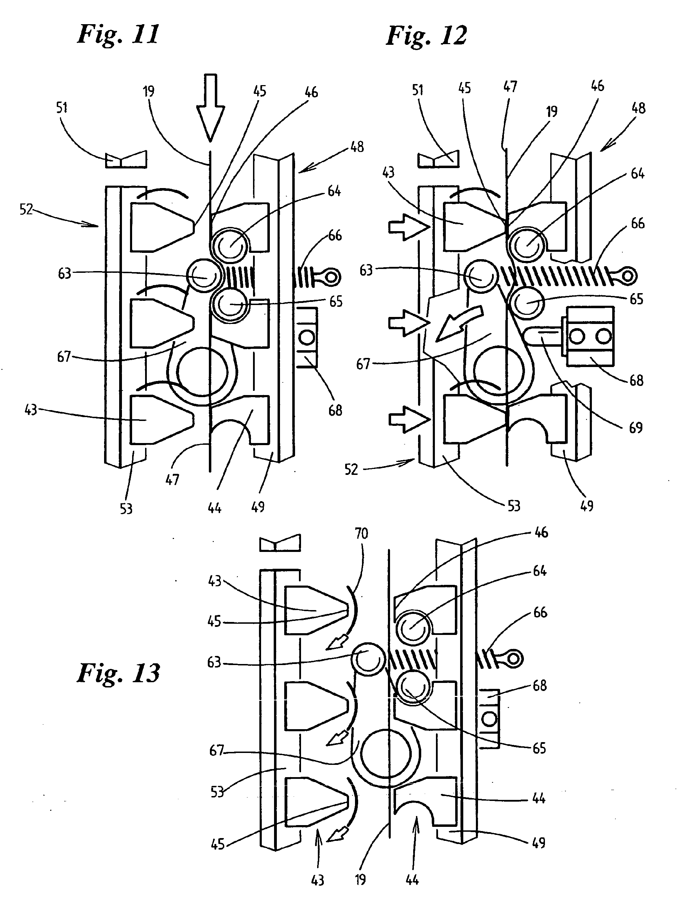

Die Siegelstation 23 bzw. das Siegelaggregat 31 ist in besonderer Weise ausgebildet. Die Bahn 19 wird im Anschluss an das als Faltweiche bzw. Faltblech ausgebildete Faltorgan 30 von einer oberhalb des Faltorgans 30 angeordneten Umlenkwalze 40 erfasst, die als Antriebswalze ausgebildet und von einem Motor, insbesondere Servomotor 41 angetrieben ist. Die Umlenkwalze 40 ist (mit dem Servomotor 41) an einer aufrechten Tragwand 42 gelagert. Eine nachfolgende Umlenkwalze 32 leitet die Bahn 19 in eine vertikale Ebene mit abwärts gerichtetem Transport zwischen Siegel- bzw. Schweißorganen, die paarweise im Bereich des Siegelaggregats 31 zu beiden Seiten der Bahn 19 positioniert sind und taktweise zusammen wirken. Bei den Schweiß- bzw. Siegelorgane handelt es sich um Siegelbacken 43 auf der einen Seite und Gegenbacken 44 auf der anderen Seite der Bahn 19. Die einander zugeordneten Backen 43, 44 sind jeweils in derselben Horizontalebene angeordnet und taktweise relativ zueinander bewegbar zwischen einer Ausgangsstellung (z. B. Fig. 11) und einer Schweiß- bzw. Siegelstellung unter Anlage an der Bahn 19 (z. B. Fig. 12). Die Siegelorgane 43, 44 sind langgestreckt bzw. steg- oder balkenförmig ausgebildet mit konvergierender Querschnittsform, sodass eine verhältnismäßig schmale Siegelfläche 45 entsteht, insbesondere in der Breite der Verbindungsnähte 21. Die Gegenbacken 44 sind mit einer etwas breiteren Gegenfläche 46 ausgebildet.

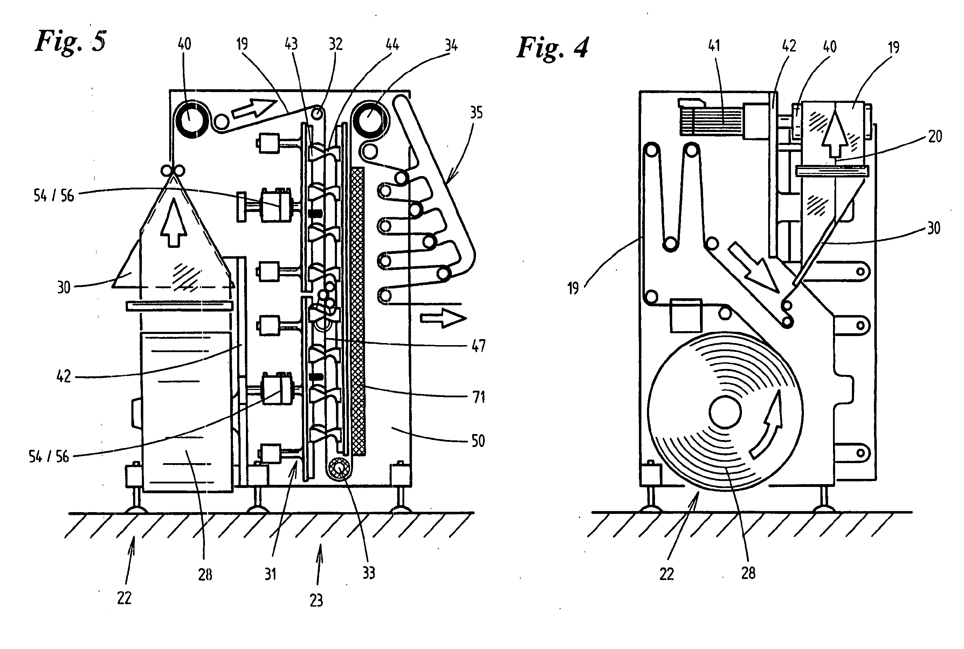

Die Anordnung und Ausbildung des Siegelaggregats 31 ermöglicht die Anordnung einer Mehrzahl von Siegelorganen im Bereich eines aufrechten Bahnabschnitts 47 der Bahn 19. Bei dem Ausführungsbeispiel gemäß Fig. 5 sind acht Siegelorgane eingerichtet bzw. acht Siegelbacken 43 mit Gegenbacken 44. In einem Arbeits- bzw. Siegeltakt können demnach acht Verbindungsnähte 21 und mithin eine entsprechende Anzahl von Beuteln 10 an der Bahn 19 definiert werden. Die Paare der Siegelbacken 43 und Gegenbacken 44 sind in einem der Abmessung eines Beutels 10 entsprechenden Abstand übereinanderliegend angeordnet. Die Siegelbacken 43 einerseits und die Gegenbacken 44 andererseits sind an gesonderten Trägern angeordnet. Die (unbeheizten) Gegenbacken 44 sind an einem gemeinsamen, über die volle Höhe durchgehenden Träger 48 angebracht, der plattenförmig ausgebildet ist. Die Gegenbacken 44 sind an Halteorganen des Trägers 48 befestigt, und zwar so, dass eine Verschiebung - nach Lösen von Verbindungsmitteln - auf dem Träger 48 möglich ist, um unterschiedliche Relativstellungen der Siegelorgane zu ermöglichen. Im vorliegenden Falle sind zwei Verbindungsschienen 49 an dem Träger 48 angebracht, die einerseits eine Führung der Gegenbacken 44 bewirken und andererseits in Verbindung mit Haltemitteln eine Fixierung an beliebiger Position ermöglichen. Der Träger 48 ist an einem nicht näher gezeigten Traggestell, insbesondere an einer aufrechten Hauptplatte 50, angebracht.

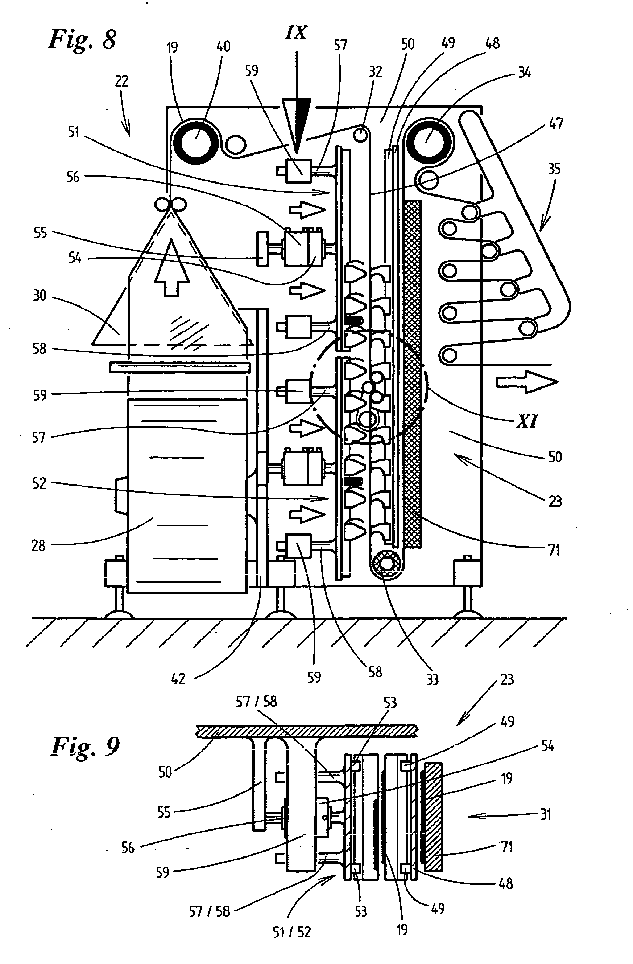

Die Siegelbacken 43 sind in ähnlicher Weise an aufrechten Tragorganen angebracht, und zwar an (zwei) Backenträgern 51, 52, die ausgerichtet in vertikaler Ebene übereinander angeordnet sind. Die Backenträger 51, 52 sind bei den gezeigten Beispielen von gleicher Größe, sodass sie geeignet sind, die gleiche Anzahl von Siegelorganen bzw. Siegelbacken 43 aufzunehmen. Bei dem Ausführungsbeispiel der Fig. 5 sind an jedem Backenträger 51, 52 vier Siegelbacken 43 angeordnet. Die einander benachbarten Siegelbacken 43 der beiden Backenträger 51, 52, also in halber Höhe des Siegelaggregats 31, sind entsprechend positioniert, damit der Abstand der Abmessung des herzustellenden Beutels 10 entspricht. Die Backenträger 51, 52 sind ebenfalls plattenförmig ausgebildet mit Verbindungsschienen 53 zur verstellbaren Fixierung der Organe. Eine Verteilung der Siegelorgane 43, 44 kann - je nach Größe der herzustellenden Beutel 10 - eine von Fig. 5 abweichende Formation aufweisen, wie beispielsweise in Fig. 8 gezeigt mit einer Mehrzahl von Siegelorganen im unteren Bereich des Siegelaggregats 31.

Das Siegelaggregat 31 ist bei den dargestellten Ausführungsbeispielen so angeordnet, dass die Gegenbacken 44 feststehend angeordnet sind. Der Träger 48 ist demnach unbeweglich. Die erforderlichen Bewegungen für die Durchführung des Siegeltaktes werden hier ausschließlich von den Siegelbacken 43 bzw. von den Backenträgern 51, 52 übernommen. Beiden Backenträgern 51, 52 sind gesonderte Betätigungsorgane zugeordnet zur Durchführung von hin- und hergehenden Querbewegungen bis zur Anlage an der Bahn 19. An jedem plattenförmigen Backenträger 51, 52 ist an der freien Rückseite ein Betätigungsorgan angebracht, nämlich ein Zylinder 54. Dieser ist für einen Hub ausgelegt, der der Bewegung der Siegelorgane zwischen einer Ausgangsstellung (Fig. 11) und einer Siegelstellung (Fig. 12) entspricht. Die Betätigungszylinder 54 greifen jeweils in halber Höhe, also mittig, an den Backenträgern 51, 52 an. Jeder Zylinder 54 ist mit einem Halter 55 verbunden, der seinerseits an einem Traggestell bzw. an der Hauptplatte 50 angebracht ist.

Das Siegelaggregat 31 ist so ausgebildet, dass die beheizten Organe, also die Siegelbacken 43 zusätzlich in eine Ruhestellung bewegt werden können mit größerem Abstand von der Bahn 19 (Fig. 13). Diese Stellung wird angesteuert, wenn eine Betriebsunterbrechung der Maschine erforderlich ist und vermieden werden soll, dass die Bahn 19 mit der von den Siegelbacken 43 ausgehenden Wärme beaufschlagt werden. Zur Durchführung dieser zusätzlichen bzw. alternativen Bewegung ist ein weiterer Betätigungszylinder vorgesehen bzw. jeder Betätigungszylinder 54 mit einem Zusatzzylinder 56 ausgestattet, der den größeren Hub der Backenträger 51, 52 bewirkt. Damit eine korrekte Parallelbewegung der Siegelbacken 43 bzw. der Backenträger 51, 52 stattfindet, sind diese mit mindestens zwei Führungsstangen 57, 58 in entsprechenden feststehenden, insbesondere an der Hauptplatte 50 angebrachten Führungen 59 abgestützt bzw. gehalten.

Die Schweiß- bzw. Siegelwerkzeuge, also die Siegelbacken 43 einerseits und Gegenbacken 44 andererseits, erstrecken sich bei dem vorliegenden Ausführungsbeispiel (Fig. 9) über die volle Breite der Tragorgane 48, 51, 52 und damit über die volle Breite der (gefalteten) Bahn 19. Die Siegelbacke 43 ist in ihrer Funktion geteilt, nämlich in einen beheizten Backenteil und einem nicht beheizten Backenteil. Diese können durch einen Luftspalt voneinander getrennt sein oder durch entsprechende Isolierung, sodass Wärme nur im Bereich des Bahnschenkels 20 auf die Bahn 19 übertragen, die Bahn 19 aber über die volle Breite durch die Organe fixiert ist. Alternativ können die Organe 43, 44 verkürzt in der Breite des Bahnschenkels 20 ausgebildet sein.

Durch die Umlenkwalzen 32 und 33 ist gewährleistet, dass die Bahn 19 in einer bestimmten Relativstellung durch das Siegelaggregat 31 hindurchgeleitet wird, nämlich unmittelbar benachbart zu den feststehenden Gegenbacken 44 (Fig. 13). Der Bahnschenkel 20 ist vorzugsweise auf der diesen Gegenbacken 44 zugekehrten Seite angeordnet, sodass die Wärme von der Rückseite der Bahn 19 her übertragen wird.

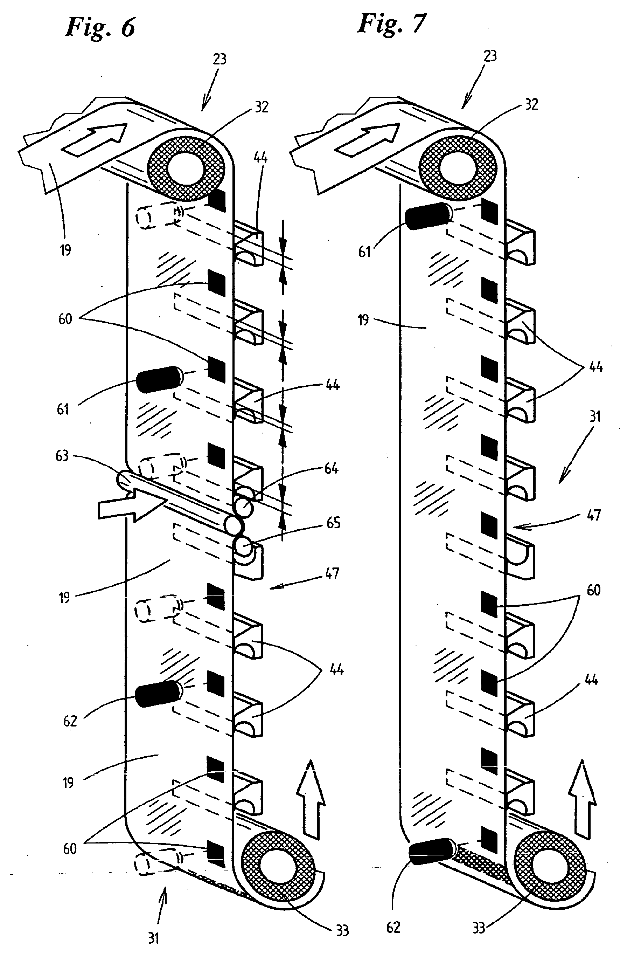

Das Siegelaggregat 31 ist mit Überwachungs- und Kontrollorganen versehen, die eine exakte Positionierung der Bahn 19 im Bereich der Schweiß- bzw. Siegelorgane gewährleisten. Es geht darum, auch bei Materialien, die gegenüber (Längs-)Spannungen empfindlich sind, eine exakte Positionierung der Verbindungsnähte 21 und damit exakte Abmessungen der Beutel 10 zu gewährleisten. Die Stellung der Bahn 19 zwischen den Umlenkwalzen 32 und 33 wird durch Sensoren überwacht. Bei dem vorliegenden Ausführungsbeispiel sind an der Bahn 19 Markierungen angebracht, hier Druckmarken 60. Diese sind in Abständen voneinander angeordnet, die den Abständen der anzubringenden Verbindungsnähte 21 entsprechen. Ortsfeste Sensoren- bzw. Druckmarkenleser 61, 62 Tasten die Druckmarken 60 ab und erkennen so die Stellung der Bahn 19. Bei dem Ausführungsbeispiel gemäß Fig. 6 sind zwei Sensoren bzw. Druckmarkenleser 60 installiert, und zwar jeweils etwa mittig zu den zwei Gruppen von Siegelbacken 43 - entsprechend den Backenträgern 51, 52. Alternativ können je Gruppe von Siegelbacken 43 zwei derartiger Druckmarkenleser 60 installiert sein, nämlich in einer durch gestrichelte Linien angedeuteten Position mit oberen und unteren Druckmarkenlesern 61, 62. Die Druckmarkenleser 61, 62 sind verstellbar, entsprechend dem Bedarf bzw. entsprechend der Vorgabe durch die Abstände der Verbindungsnähte 21. Die Druckmarken 60 sind bei der Fertigung der Folie vorgegeben und auf die jeweilige Abmessung der Beutel 10 ausgerichtet. Bei erkannten Fehlstellungen der Bahn 19 im Bereich des Bahnabschnitts 47 kann ein Ausgleich über die obere und/oder untere Umlenkwalze 32, 33 bewirkt werden, wobei diese als Antriebswalze, insbesondere mit Servoantrieb, ausgebildet sind. Die Druckmarkenleser 61, 62 sind bei dem Ausführungsbeispiel gemäß Fig. 6 so verteilt, dass jeweils mittig im Bereich der oberen vier Siegelbacken 43 bzw. Gegenbacken 44 mittig ein Sensor 61 und bei den unteren vier Backen 43, 44 ebenfalls mittig ein Sensor 62 positioniert ist, und zwar vorzugsweise mittig zwischen zwei aufeinanderfolgenden Backen 43, 44. Alternativ kann eine gestrichelt dargestellte Verteilung von vier Sensoren gewählt werden, wobei jeweils ein Sensor oben und unten im Bereich der Umlenkwalze 32, 33 positioniert und die weiteren Sensoren mit gleichen Abständen angeordnet sind. Bei der Ausführung gemäß Fig. 7, die vorzugsweise für eine Bahn mit geringer Dehnbarkeit geeignet ist, befindet sich jeweils ein Sensor 61, 62 unmittelbar unterhalb bzw. oberhalb der Umlenkwalzen 32, 33.

Das Siegelaggregat 31 kann darüber hinaus mit einem Ausgleichsorgan versehen sein, um eventuelle Ungenauigkeiten in dem Bahnabschnitt 47 aufgrund entsprechender Messungen auszugleichen. Dies gilt vor allem bei spannungsempfindlichen Materialien. Das Ausgleichsorgan besteht aus mindestens einem Ablenk- bzw. Umlenkorgan, welches die Bahn 19 zur Reduzierung der wirksamen Länge geringfügig seitlich auslenkt. Vorteilhaft ist eine quer zur Bahn 19 gerichtete Ausgleichswalze 63, die durch queraxiale Bewegung eine seitwärtsgerichtete Umlenkung der Bahn 14 bewirkt (Fig. 11). Die Ausgleichswalze 63 arbeitet vorzugsweise mit Gegenwalzen 64, 65 zusammen, die auf der gegenüberliegenden Seite der Bahn 19 feststehend gelagert sind und aufgrund der Abstände eine Auslenkung der Bahn 19 bewirken. Die bewegbare Ausgleichswalze 63 ist hier durch ein Betätigungsorgan aus der Ausgangsstellung gemäß Fig. 12, Fig. 13 - mit Abstand von der Bahn 19 - in die Auslenkstellung (Fig. 11) bewegbar. Es handelt sich dabei um eine (Zug-)Feder 66, die die Ausgleichswalze 63 ständig in die Umlenkstellung unter Anlage an den feststehenden Gegenwalzen 64, 65 belastet. Zur Durchführung der Bewegungen ist die Ausgleichswalze 63 an einem Hebel 67 angeordnet, der durch die Wirkung der Feder 66 um ein feststehendes Lager schwenkbar ist. Als gegengerichtetes Betätigungsorgan für die Ausgleichswalze 63 bzw. den Hebel 67 dient ein (pneumatischer) Zylinder 68, dessen Kolben 69 gegen den Hebel 67 ausfahrbar ist, um diesen zu verschwenken, nämlich aus der Ablenkstellung in eine zurückgezogene Stellung.

Das Ausgleichsorgan 63, 64, 65 wird vorzugsweise so eingesetzt, dass bei einem erkannten Versatz zwischen Druckmarke und Sollstellung der Bahn im Bereich der Backen 43, 44 die Ausgleichswalze 63 in die Ablenkstellung gemäß Fig. 11 bewegt wird. In Fig. 6 ist der Fall gezeigt, dass die Abstände der Druckmarken voneinander (geringfügig) größer ist als die Abstände der herzustellenden Verbindungsnähte 21. Durch das Ausgleichsorgan 63 wird eine Korrektur der Relativstellung der Bahn 19 im Bereich der unteren (vier) Backen 43, 44 bewegt, da bei Stillstand der Bahn 19 der untere Teilbereich geringfügig aufwärtsbewegt wird. Dadurch werden die Stellungsdifferenzen beseitigt. Im oberen Teil sind die Abweichungen geringer und werden in der dargestellten geringen Größe hingenommen.

Die Einzelheiten gemäß Fig. 11 bis Fig. 13 zeigen eine weitere Besonderheit. Um die Bahn 19 vor Wärmeeinflüssen bei längerem Stillstand bzw. Betriebsunterbrechung zu schützen, werden in der entsprechend zurückgezogenen Stellung der Siegelbacken 43 (Fig. 13) Schutzschilde 70 vor die Siegelbacken 43 bewegt, nämlich auf der der Bahn 19 zugekehrten Seite. Die Schutzschilde 70 sind gewölbte Formstücke aus wärmeabweisendem Werkstoff. Die Schutzschilde 70 sind seitlich schwenkbar gelagert und können aufgrund eines entsprechenden Steuersignals in die Schutzstellung gemäß Fig. 13 oder zurück in die Ausgangsstellung gemäß Fig. 11, Fig. 12 neben bzw. oberhalb der Siegelbacken 44 bewegt werden.

Als weitere Maßnahme für die qualitative Verbesserung der Beutel 10 bzw. der Verbindungsnähte 21 ist eine Kühlung der Bahn 19 im Anschluss an die Siegelung der Verbindungsnähte 21 vorgesehen. Gemäß Fig. 5 ist die untere Umlenkwalze 33 für die Bahn 19 als Kühlwalze ausgebildet, insbesondere in der Ausführung mit einem durch die hohle Walze hindurchströmenden Kühlmedium (Luft, Flüssigkeit). Zusätzlich oder alternativ kann unmittelbar im Anschluss an das Siegelaggregat 31 ein Kühlorgan für die Bahn 19 installiert sein. Gemäß Fig. 5 ist an der Rückseite des Siegelaggregats 31 eine aufrechte Kühlplatte 71 angeordnet. Auch diese kann von einem Kühlmedium durchströmt oder in anderer Weise ausgebildet sein. Die Kühlplatte 71 befindet sich hier in geringem Abstand von und parallel zur Trägerplatte 48. Die Bahn 19 wird durch einen aufrechten Spalt zwischen Siegelaggregat 31 und Kühlplatte 71 in Aufwärtsrichtung transportiert.

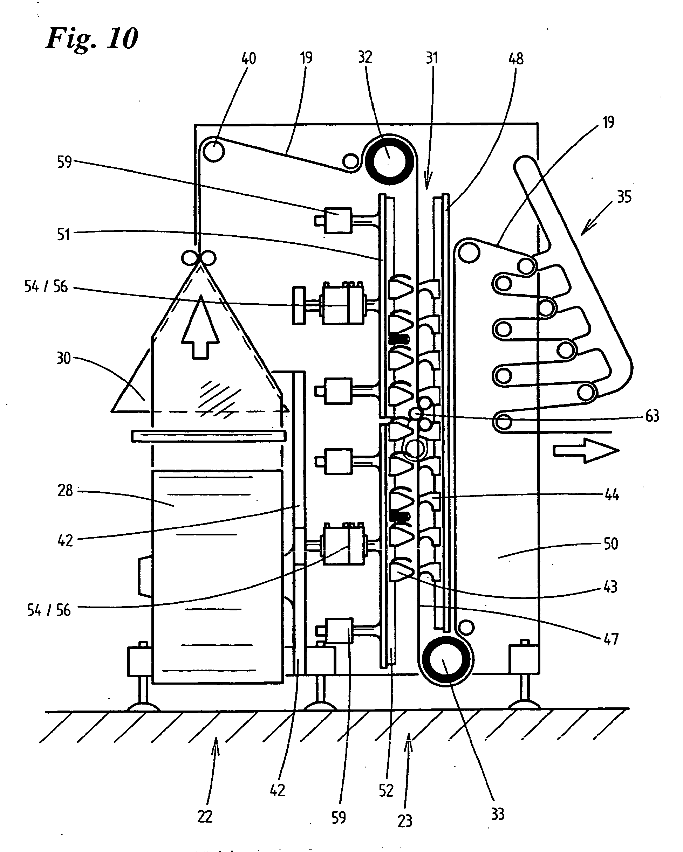

Wenn bei bestimmten Materialien für die Herstellung der Beutel 10 auf eine Kühlung verzichtet werden kann und eine besonders kompakte Bauweise erwünscht ist, sind die obere und untere Umlenkwalze 32 und 33 unmittelbar als (durch Servomotor angetriebene) Antriebswalzen ausgebildet, wobei die sonst versetzt angeordneten oberen und unteren Antriebswalzen (Fig. 5) entfallen können. Stattdessen wird die Bahn 19 bei dem Ausführungsbeispiel der Fig. 10 im Anschluss an die Folienstation 22 bzw. an das Faltorgan 30 über eine einfache Umlenkwalze geführt. Gleichermaßen ist dem Ausgleichspendel 35 im Anschluss an das Siegelaggregat 31 ebenfalls eine einfache Umlenkwalze 34 zugeordnet. Auch auf die in Fig. 8 gezeigte Kühlplatte 71 kann bei dieser einfacheren Lösung verzichtet werden.

### Bezugszeichenliste:

| | | | |
|---|---|---|---|
| 10 | Beutel | 41 | Servomotor |
| 11 | Tasche | 42 | Tragwand |
| 12 | Taschen-Vorderwand | 43 | Siegelbacke |
| 13 | Taschen-Rückwand | 44 | Gegenbacke |
| 14 | Seitennaht | 45 | Siegelfläche |
| 15 | Seitennaht | 46 | Gegenfläche |
| 16 | Öffnung | 47 | Bahnabschnitt |
| 17 | Wickellasche | 48 | Träger |
| 18 | Tape | 49 | Verbindungsschiene |
| 19 | Bahn | 50 | Hauptplatte |
| 20 | Bahnschenkel | 51 | Backenträger |
| 21 | Verbindungsnaht | 52 | Backenträger |
| 22 | Folienstation | 53 | Verbindungsschiene |
| 23 | Siegelstation | 54 | Betätigungszylinder |
| 24 | Tapestation | 55 | Halter |
| 25 | Trennstation | 56 | Zusatzzylinder |
| 26 | Übergabestation | 57 | Führungsstange |
| 27 | Füll- und Verschließstation | 58 | Führungsstange |
| 28 | Bobine | 59 | Führung |
| 29 | Ausgleichspendel | 60 | Druckmarken |
| 30 | Faltorgan | 61 | Druckmarkenleser |
| 31 | Siegelaggregat | 62 | Druckmarkenleser |
| 32 | Umlenkwalze | 63 | Ausgleichswalze |
| 33 | Umlenkwalze | 64 | Gegenwalze |
| 34 | Umlenkwalze | 65 | Gegenwalze |
| 35 | Ausgleichspendel | 66 | Feder |
| 36 | Beutelförderer | 67 | Hebel |
| 37 | Übergabeorgan | 68 | Zylinder |
| 38 | Beutel-Revolver | 69 | Kolben |
| 39 | Abförderer | 70 | Schutzschild |
| 40 | Umlenkwalze | 71 | Kühlplatte |

## Patentansprüche

1. Vorrichtung zum Herstellen von Tabak-Beuteln (10) aus Folie mit einer durch Umfalten gebildeten und durch Seitennähte (14, 15) begrenzten Tasche (11), die eine Öffnung (16) sowie eine Verschlusslasche, insbesondere eine Wickellasche (17) aufweist, wobei zum Herstellen der Beutel (10) eine fortlaufende Folien-Bahn (19) von einer Bobine (28) in einer Folienstation (22) abgezogen, mittels Faltorgan (30) in Längsrichtung unter Bildung eines Bahnschenkels (20) umgefaltet, sodann quergerichtete Verbindungsnähte (21) in einer Siegelstation (23) im Bereich des Bahnschenkels (20) angebracht und danach die Beutel (10) durch quergerichtete Trennschnitte in einer Trennstation (25) entlang der (doppelt breiten) Verbindungsnähte (21) von der Bahn (19) abtrennbar und einem Beutel-Revolver (38) zugeführt werden, **gekennzeichnet durch** folgende Merkmale:
a) die Bobine (28) und dieser zugeordnete Umlenkwalzen für die Folien-Bahn (19) sind in der Folienstation (22) quer zu einer Hauptförderrichtung der Folien-Bahn (19) gelagert, also mit einer Drehachse in Hauptförderrichtung weisend,
b) im Bereich des Faltorgans (30) zur Bildung des Bahnschenkels (20) ist die Folien-Bahn (19) umlenkbar in die Hauptförderrichtung und der Siegelstation (23) mit einem Siegelaggregat (31) für die Anbringung der Verbindungsnähte (21) zuführbar,
c) das Siegelaggregat (31) ist in aufrechter Stellung positioniert, derart, dass die Folien-Bahn (19) in aufrechter Ebene **durch** das Siegelaggregat (31) hindurchtransportierbar ist,
d) die mit den Verbindungsnähten (21) versehene Folien-Bahn (19) ist im Anschluss an das Siegelaggregat (31) **durch** eine Trennstation (25) hindurchförderbar zum Abtrennen der Beutel (10) von der Folien-Bahn (19) mittels Trennmesser,
e) die Beutel (10) sind im Anschluss an die Trennstation (25) **durch** einen Beutelförderer (36) transportierbar im Bereich des Beutel-Revolvers (38), der oberhalb und versetzt zum Beutelförderer (36) angeordnet ist,
f) die Beutel (10) sind **durch** Übergabeorgane (37) vom Beutelförderer (36) an den Beutel-Revolver (38) übertragbar.

2. Vorrichtung nach Anspruch 1, **dadurch gekennzeichnet, dass** der Beutel-Revolver (38) um eine sich in der Hauptförderrichtung erstreckende Achse drehbar ist.

3. Vorrichtung nach Anspruch 1 oder 2, **dadurch gekennzeichnet, dass** zwischen der Bobine (28) für die Folien-Bahn (19) und dem Faltorgan (30) zum Herstellen des Bahnschenkels (20) ein Ausgleichspendel (29) mit entsprechend der Achse der Bobine (28) ausgerichteten Umlenkwalzen angeordnet ist.

4. Vorrichtung nach Anspruch 1 oder einem der weiteren Ansprüche, **dadurch gekennzeichnet, dass** die mit dem Bahnschenkel (20) versehene Folien-Bahn (19) in der Hauptförderrichtung über eine obere Umlenkwalze (32) in das aufrechte Siegelaggregat (31) einführbar und durch eine weitere, untere Umlenkwalze (33) unterhalb des Siegelaggregats (31) in eine aufrechte Förderrichtung umlenkbar ist.

5. Vorrichtung nach Anspruch 1 oder einem der weiteren Ansprüche, **dadurch gekennzeichnet, dass** zwischen dem Siegelaggregat (31) und der Trennstation (25) ein (weiteres) Ausgleichspendel (35) für die Folien-Bahn (19) angeordnet ist.

6. Vorrichtung nach Anspruch 1 oder einem der weiteren Ansprüche, **dadurch gekennzeichnet, dass** die Folien-Bahn (19) im Anschluss an das Siegelaggregat (31) durch eine Umlenkwalze (33) in eine aufrechte Förderebene umlenkbar und durch eine weitere, vorzugsweise als Antriebswalze für die Folien-Bahn (19) ausgebildete Umlenkwalze (34) dem Ausgleichspendel (35) und von diesem der Trennstation (25) zum Abtrennen der Beutel (10) zuführbar ist.

7. Vorrichtung nach Anspruch 1 oder einem der weiteren Ansprüche, **dadurch gekennzeichnet, dass** im Anschluss an das (zweite) Ausgleichspendel (35) und in Förderrichtung vor der Trennstation (25) eine Tapestation (24) zum Aufbringen klebender Verschlussstreifen für den Beutel - Tape (18) - auf die Bahn (19) angeordnet ist.

8. Vorrichtung nach Anspruch 1 oder einem der weiteren Ansprüche, **dadurch gekennzeichnet, dass** der an die Trennstation (25) anschließende Beutelförderer (36) die Beutel (10) in der Hauptförderrichtung transportiert auf einem horizontalen Fördergurt zur Übertragung an den Beutel-Revolver (38) mittels Übergabeorganen.

## Claims

1. Apparatus for producing tobacco bags (10) from sheet material having a pocket (11) which is formed by folding, is bounded by side seams (14, 15) and has an opening (16) and a closure flap, in particular a fold-over flap (17), it being the case that, in order to produce the bags (10), a continuous sheet-material web (19) is drawn off from a reel (28) in a sheet-material station (22), folded over in the longitudinal direction by means of a folding device (30) to form a web leg (20), and then, in a sealing station (23), transversely directed connecting seams (21) are provided in the region of the web leg (20) and, subsequently, it being possible to sever the bags (10) from the web (19) in a severing station (25) by transversely directed severing cuts along the (double-width) connecting seams (21) and feed them to a bag turret (38), **characterized by** the following features:
a) the reel (28) and deflecting rollers assigned thereto for the sheet-material web (19) are stored in the sheet-material station (22) transversely to a main conveying direction of the sheet-material web (19), that is to say with an axis of rotation oriented in the main conveying direction,
b) in the region of the folding device (30), for the purpose of forming a web leg (20), the sheet-material web (19) can be deflected into the main conveying direction and can be fed to the sealing station (23) with a sealing subassembly (31) for applying the connecting seams (21),
c) the sealing subassembly (31) is situated in an upright position such that the sheet-material web (19) can be transported through the sealing subassembly (31) in an vertical plane,
d) following the sealing subassembly (31), the sheet-material web (19) provided with the connecting seams (21) can be directed through a severing station (25) for the purpose of severing the bags (10) from the sheet-material web (19) by means of a severing blade,
e) following the severing station (25), the bags (10) can be transported by a bag conveyor (36) in the region of the bag turret (38), which is arranged above, and in an offset manner in relation to, the bag conveyor (36),
f) the bags (10) can be transferred from the bag conveyor (36) to the bag turret (38) by means of transfer devices (37).

2. Apparatus according to Claim 1, **characterized in that** the bag turret (38) can be rotated about an axis which extends in the main conveying direction.

3. Apparatus according to Claim 1 or 2, **characterized in that** a compensating pendulum arrangement (29), with deflecting rollers whose orientation corresponds to the axis of the reel, is arranged between the reel (28) for the sheet-material web (19) and the folding device (30) for producing the web leg (20).

4. Apparatus according to Claim 1 or one of the further Claims, **characterized in that** the sheet material web (19), provided with the web leg (20), can be introduced into the upright sealing subassembly (31) in the main conveying direction via an upper deflecting roller (32) and can be deflected into an upright conveying direction by means of a further, lower deflecting roller (33) below the sealing subassembly (31).

5. Apparatus according to Claim 1 or one of the further Claims, **characterized in that** a further compensating pendulum arrangement (35) is arranged between the sealing subassembly (31) and the severing station (25).

6. Apparatus according to Claim 1 or one of the further Claims, **characterized in that**, following the sealing sub-assembly (31), the sheet-material web (19) can be deflected by a deflecting roller (33) into an upright conveying plane and can be fed by a further deflecting roller (34), preferably one configured as a drive roller for the sheet-material web (19), to the compensating pendulum arrangement (35), and from the latter to the severing station (25) for severing the bags (10).

7. Apparatus according to Claim 1 or one of the further Claims, **characterized in that**, following the (second) compensating pendulum arrangement (35), a tape station (24) is arranged in the conveying direction before the severing station (25) for the purpose of attaching adhesive closure strips for the bag - tape (18) - onto the sheet-material web (19).

8. Apparatus according to Claim 1 or one of the further Claims, **characterized in that** the bag conveyor (36) which follows the severing station (25) transports the bags (10) in the main conveying direction on a horizontal conveying belt for transfer to the bag turret (38) by means of transfer devices.

## Revendications

1. Dispositif de fabrication de sachets de tabac (10) à partir de film, avec une poche (11) formée par repliement et limitée par des joints latéraux (14, 15), qui présente une ouverture (16) ainsi qu'un rabat de fermeture, notamment un rabat enroulable, dans lequel dispositif, pour la fabrication des sachets (10), une bande de film continue (19) est tirée d'une bobine (28) dans un poste de film (22), est repliée au moyen d'un organe de pliage (30) dans la direction longitudinale en formant un segment de bande (20), puis des joints de liaison (21) orientés transversalement sont appliqués dans la région du segment de bande (20) dans un poste de scellement (23), et ensuite les sachets (10) peuvent être séparés de la bande (19) dans un poste de séparation (25) par des coupes de séparation orientées transversalement, le long des joints de liaison (21) (deux fois plus larges) et peuvent être acheminés à une tourelle de sachets (38), **caractérisé par** les caractéristiques suivantes :
a) la bobine (28) et des cylindres déflecteurs associés à celle-ci pour la bande de film (19) sont supportés dans le poste de film (22) transversalement à une direction de transport principale de la bande de film (19), c'est-à-dire avec un axe de rotation tourné dans la direction de transport principale,
b) dans la région de l'organe de pliage (30) pour la formation du segment de bande (20), la bande de film (19) peut être acheminée, de manière à pouvoir être déviée dans la direction de transport principale, au poste de scellement (23), au moyen d'une unité de scellement (31) pour appliquer les joints de liaison (21),
c) l'unité de scellement (31) est positionnée dans une position debout, de telle sorte que la bande de film (19) puisse être transportée dans un plan de position debout à travers l'unité de scellement (31),
d) la bande de film (19) pourvue des joints de liaison (21) peut être transportée à la suite de l'unité de scellement (31) à travers un poste de séparation, pour la séparation des sachets (10) de la bande de film (19) au moyen d'un couteau de séparation,
e) les sachets (10) peuvent être transportés à la suite du poste de séparation (25) par un transporteur de sachets (36) dans la région de la tourelle de sachets (38), qui est disposée au-dessus du transporteur de sachets (36) et de manière décalée par rapport à celui-ci,
f) les sachets (10) peuvent être transférés par des organes de transfert (37) depuis le transporteur de sachets (36) jusqu'à la tourelle de sachets (38).

2. Dispositif selon la revendication 1, **caractérisé en ce que** la tourelle de sachets (38) peut tourner autour d'un axe s'étendant dans la direction de transport principale.

3. Dispositif selon la revendication 1 ou 2, **caractérisé en ce que** qu'un pendule d'équilibrage (29) avec des rouleaux déflecteurs orientés de manière correspondant à l'axe de la bobine (28) est disposé entre la bobine (28) pour la bande de sachets (19) et l'organe de pliage (30) pour fabriquer le segment de bande (20).

4. Dispositif selon la revendication 1, ou selon l'une quelconque des autres revendications, **caractérisé en ce que** la bande de film (19) pourvue du segment de bande (20) peut être introduite dans la direction de transport principale par le biais d'un cylindre déflecteur supérieur (32) dans l'unité de scellement (31) debout et peut être déviée par un autre cylindre déflecteur (33), inférieur, en dessous de l'unité de scellement (31) dans une direction de transport en position debout.

5. Dispositif selon la revendication 1, ou selon l'une quelconque des autres revendications, **caractérisé en ce qu'**un (autre) pendule d'équilibrage (35) pour la bande de film (19) est disposé entre l'unité de scellement (31) et le poste de séparation (25).

6. Dispositif selon la revendication 1, ou selon l'une quelconque des autres revendications, **caractérisé en ce que** la bande de film (19) peut être déviée à la suite de l'unité de scellement (31) par un cylindre déflecteur (33) dans un plan de transport en position debout et peut être acheminée par un autre cylindre déflecteur (34) réalisé de préférence sous forme de cylindre d'entraînement pour la bande de film (19), au pendule d'équilibrage (35) et depuis celui-ci au poste de séparation (25) en vue de la séparation des sachets (10).

7. Dispositif selon la revendication 1, ou selon l'une quelconque des autres revendications, **caractérisé en ce qu'**un poste d'application de ruban (24) pour appliquer un ruban de fermeture adhésif pour les sachets - le ruban (18) - sur la bande (19), est disposé à la suite du (deuxième) pendule d'équilibrage (35) et dans la direction de transport avant le poste de séparation (25).

8. Dispositif selon la revendication 1, ou selon l'une quelconque des autres revendications, **caractérisé en ce que** le transporteur de sachets (36) se raccordant au poste de séparation (25) transporte les sachets (10) dans la direction de transport principale sur une courroie de transport horizontale en vue de leur transfert à la tourelle de sachets (38), au moyen d'organes de transfert.
